# EUROPEAN PATENT APPLICATION

(11) **EP 3 043 308 A1**
(43) Date of publication of application: **13.07.2016**
(21) Application number: 15188175.2
(22) Date of filing: 02.10.2015
(51) Int. Cl.: G06Q 30/02, G06Q 50/00

(54) **USER PROVIDED IMAGE ADORNMENT OF SOCIAL MEDIA CONTENT**

(30) Priority: 12.01.2015 US 201514594370
(71) Applicant: Ello, Public Benefit Corporation, Burlington, VT 05401 (US)
(72) Inventor: Budnitz, Paul, Shelburne, VT Vermont 05482 (US); Berger, Todd, Boulder, CO 80302 (US); Föhr, Lucian, Boulder, 80304 (US)
(74) Representative: Hannke, Christian

(57) **Abstract**

Social media websites provide a means for individuals and enterprises to sell goods and services. Managing such social media websites is provided whereby a user, a client of the social media website, may post social media content adorned with indicators associated with a transaction for an item identified by the adornment. The adornment comprises human-readable (or perceivable) elements to identify to a viewer of the social media content that the item is available for a transaction and machine-readable elements operable to receive a user's input and initiate a transaction associated with the item. The social media content and adornments may be hosted on the same social media site or distributed across a plurality of resources.

## Description

### FIELD OF THE DISCLOSURE

The present disclosure is generally directed toward image enhancements and more particularly enhancements to facilitate commerce transaction functionality.

### BACKGROUND

The advent of social media has provided individuals with the opportunity to post content for viewing by friends, colleagues, or the general public. General purpose social media websites (e.g., Ello, Facebook, Google+, etc.) allow users to post a nearly limitless variety of content and subject matter. Other websites may be directed towards a particular interest, such as Linkedln for maintaining business relationships, LonelyPlanet, for travel, eBay and Craigslist for general buying and selling, as well as countless specialty websites focusing on a particular subject.

An individual or business who wishes to place an item for sale on a website (e.g., social media, specialty, etc.) must establish an account, be authorized by the hosting website, post and maintain information compliant with each website, and manage inquiries and sales from a plurality of sources. If a poster wishes to sell more items, or advertise on more than one location, the process of managing a sales presence on multiple websites quickly becomes highly burdensome.

### SUMMARY

Opportunities exist for sellers to make their goods and services available for purchase on a variety of public network (e.g., Internet) websites. However, unless a party is content to sell a single item on a single website, the administrative burden of multiple listings escalates rapidly with the number of websites. In particular, a poster of social media content typically has to manage their respective listing, inventory, and other aspects for each website. If an item sells on website A, a listing on website B for the same item must be updated to indicate that the item is no longer available for sale. Managing items under such a business model is resource and labor intensive and, perhaps more importantly, error prone. It is with respect to the above issues and other problems that the embodiments presented herein were contemplated.

In one embodiment, posting of social media content by a user is provided whereby the user may adorn the content with an enhancement indicating that the item is available for purchase.

The term "content" as used herein shall mean any user provided elements to a social media website that are accessible to at least one other user, in particular, image-based content (e.g., photographs, drawings, video, multimedia, etc.) that are capable of being adorned to provide a visual indicator to a user that a particular item or portion of the content has been emphasized, such as to identify the item or the content within the portion as being for sale.

The term "adorn," "adornment," and forms thereof, as used herein shall mean a user provided or defined indicator that, when presented on a user's device, the content, or a portion of the content is indicated, by the adornment, as being for sale, purchase, lease, rent, give away, lent, barter, donate, gift, view, listen, download, try, bid, offer, trade, etc. It should be understood by those of ordinary skill in the art that while embodiments described herein may be more readily understood with respect to an item or items for sale, one of ordinary skill in the art would appreciate that services may also be identified for sale, given away, etc. or a combination of sale, sale terms, and/or services For example, a picture with an adornment around a car may be associated with one or more of car detailing services, car rentals, purchase, or other car-related goods and/or services. In another embodiment, the good or service purchased is a donation, for example, a charitable organization may show a picture with an adornment around a damaged building in order to solicit donations of money, labor, and/or building materials, which may or may not be utilized for the specific building pictured within the adornment.

The adornment may be an appropriate indicator for the specific media type. For example, an image may be adorned with a box, circle, arrow, or similar marking to indicate the item identified is available for purchase. In another example, a portion of text may be highlighted, underlined, a particular font, etc. in otherwise identified as for sale.

As an advantage, derived by implementing certain embodiments disclosed herein, a user may post one or more websites, in particular, social media websites, a social media content adorned with indicators enabling viewers of the social media content to identify the item as available for purchasing and, if they so choose, a means to initiate a transaction to purchase the item. If the item is purchased, an inventory notification may then be made to affect all subsequent views of the social media content, including views of the social media content hosted on other websites.

In one embodiment, a system is disclosed, comprising: a server comprising a processor and accessible storage; a network interface communicatively coupling the server to a network; an adornment descriptor stored in the accessible storage; and wherein the adornment descriptor comprises a machine-readable portion and a human-readable portion; wherein the machine-readable portion defines a target portion of a social media content; wherein the human-readable portion comprises at least a first human-readable indicia of a transaction subject associated with the target portion; and wherein the server presents to a user device, via the network interface, the social media content comprising an adornment defined by the adornment descriptor.

In another embodiment, a method is disclosed comprising: receiving, by a server, a social media content; receiving, by the server, an adornment descriptor input associated with a target portion of the social media content; generating, from the adornment descriptor input, a machine-readable portion of an adornment description, and wherein generated machine-readable portion comprises data to cause indicia of the target portion to be displayed on a viewing device configured to display the social media content; receiving, by the server, a human-readable portion of the adornment description; storing the social media content and associated adornment descriptor; and upon receiving a request, presenting the stored social media content and associated adornment descriptor.

In another embodiment, a method, comprising: receiving, at a server, a request for social media content; accessing, by the server, the social media content; determining, by the server, that the social media content comprises an adornment descriptor comprising a machine-readable portion and a human-readable portion; serving the social media content with the adornment descriptor; and causing the social media content to display indicia of a target portion defined by the machine-readable portion.

The phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C" and "A, B, and/or C" means A alone, B alone, C alone, A and B together, A and C together, B and C together, or A, B and C together.

The term "a" or "an" entity refers to one or more of that entity. As such, the terms "a" (or "an"), "one or more" and "at least one" can be used interchangeably herein. It is also to be noted that the terms "comprising," "including," and "having" can be used interchangeably.

The term "automatic" and variations thereof, as used herein, refers to any process or operation done without material human input when the process or operation is performed. However, a process or operation can be automatic, even though performance of the process or operation uses material or immaterial human input, if the input is received before performance of the process or operation. Human input is deemed to be material if such input influences how the process or operation will be performed. Human input that consents to the performance of the process or operation is not deemed to be "material."

The term "computer-readable medium" as used herein refers to any tangible storage that participates in providing instructions to a processor for execution. Such a medium may take many forms, including but not limited to, non-volatile media, volatile media, and transmission media. Non-volatile media includes, for example, NVRAM, or magnetic or optical disks. Volatile media includes dynamic memory, such as main memory. Common forms of computer-readable media include, for example, a floppy disk, a flexible disk, hard disk, magnetic tape, or any other magnetic medium, magneto-optical medium, a CD-ROM, any other optical medium, punch cards, paper tape, any other physical medium with patterns of holes, a RAM, a PROM, and EPROM, a FLASH-EPROM, a solid state medium like a memory card, any other memory chip or cartridge, or any other medium from which a computer can read. When the computer-readable media is configured as a database, it is to be understood that the database may be any type of database, such as relational, hierarchical, object-oriented, and/or the like. Accordingly, the disclosure is considered to include a tangible storage medium and prior art-recognized equivalents and successor media, in which the software implementations of the present disclosure are stored.

The terms "determine," "calculate," and "compute," and variations thereof, as used herein, are used interchangeably and include any type of methodology, process, mathematical operation or technique.

The term "module" as used herein refers to any known or later developed hardware, software, firmware, artificial intelligence, fuzzy logic, or combination of hardware and software that is capable of performing the functionality associated with that element. Also, while the disclosure is described in terms of exemplary embodiments, it should be appreciated that other aspects of the disclosure can be separately claimed.

### BRIEF DESCRIPTION OF THE DRAWINGS

The present disclosure is described in conjunction with the appended figures:
- Fig. 1: depicts the presentation of social media content in accordance with embodiments of the present disclosure;
- Fig. 2,: depicts a first system in accordance with embodiments of the present disclosure;
- Fig. 3,: depicts a second system in accordance with embodiments of the present disclosure;
- Fig. 4,: depicts a third system in accordance with embodiments of the present disclosure;
- Fig. 5,: depicts social media content in accordance with embodiments of the present disclosure;
- Fig. 6,: depicts modified social media content in accordance with embodiments of the present disclosure;
- Fig. 7,: depicts a first process in accordance with embodiments of the present disclosure; and
- Fig. 8,: depicts a second process in accordance with embodiments of the present disclosure

### DETAILED DESCRIPTION

The ensuing description provides embodiments only, and is not intended to limit the scope, applicability, or configuration of the claims. Rather, the ensuing description will provide those skilled in the art with an enabling description for implementing the embodiments. It being understood that various changes may be made in the function and arrangement of elements without departing from the spirit and scope of the appended claims.

Any reference in the description comprising an element number, without a subelement identifier when a subelement identifier exists in the figures, when used in the plural is intended to reference any two or more elements with a like element number. When such a reference is made in the singular form, it is intended to reference one of the elements with the like element number without limitation to a specific one of the elements. Any explicit usage herein to the contrary or providing further qualification or identification shall take precedence.

The exemplary systems and methods of this disclosure will also be described in relation to analysis software, modules, and associated analysis hardware. However, to avoid unnecessarily obscuring the present disclosure, the following description omits well-known structures, components and devices that may be shown in block diagram form, and are well known, or are otherwise summarized.

For purposes of explanation, numerous details are set forth in order to provide a thorough understanding of the present disclosure. It should be appreciated, however, that the present disclosure may be practiced in a variety of ways beyond the specific details set forth herein.

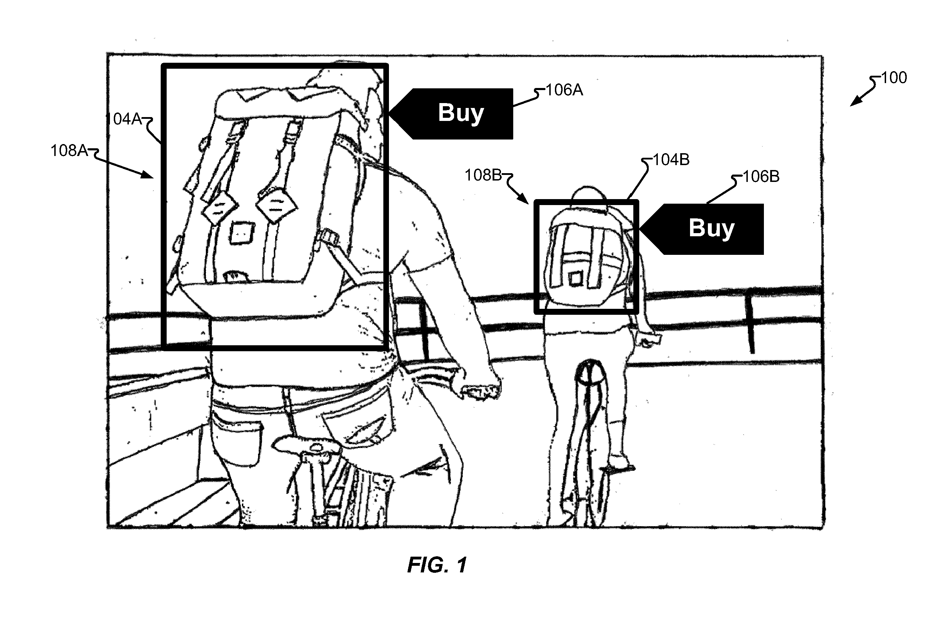

With reference now to Fig. 1, the presentation of social media content 100 will be described for facilitating a transaction in accordance with embodiments of the present disclosure. In one embodiment, social media content 100 comprises one or more adornments, such as target portion indicia 104 and/or label 106. An adornment indicates to a viewer of social media content 100 that a portion of social media content 100 indicates at least one transaction subject 108. As illustrated herein, target portion indicia 104A indicates transaction subject 108A and target portion indicia 104B indicates transaction subject 104B.

In one embodiment, and as described more completely with respect to the figures that follow, adornments comprise a human-readable portion and a machine-readable portion. The human-readable portion may comprise system defined text and/or other visual elements, user defined text (e.g., description, price, etc.), symbols (e.g., "$","!", etc.), and/or graphic elements defined by a user posting or otherwise authorized to adorn social media content 100. In another embodiment, the machine-readable portion comprises instructions to present the human-readable portion and/or process events (e.g., mouse-over, keystrokes, selections, clicks, etc.). For example, a user may post social media content 100 and define target portions 104A, 104B. The machine-readable portion may translate the definition into instructions to, for example, draw a rectangle around transaction subject 108A, 108B and, upon receiving an interaction, the machine-readable portion may cause a subsequent human-readable portion to be displayed and/or a transaction process to be initiated.

Adornments are variously embodied and include target portion indicia 104A, 104B illustrated as rectangles. In other embodiments, other closed geometricshapes (e.g., circles, ellipses, polygons, etc.), open geometries (e.g., brackets, braces, etc.), irregular "squiggles," highlighted area (e.g., bulls eye, crosshair, zoomed, brightened, color enhanced, contrast enhanced, etc.), and/or de-highlighted (e.g., darkened, de-enhanced color, de-enhanced contrast, blurred, etc.) portions of a portion of social media content 100 that exclude transaction subject 108, text (e.g., the text portion of label 106), and/or other descriptors or combinations thereof that is operable to convey to a human viewer that transaction subject 108 of social media content 100 is the subject of a potential transaction.

Adornments may be visible at all times when social media content 100 is visible. In other embodiments, adornments may be shown unless hidden or hidden unless shown, such as determined by the machine-readable portion, the social media host, the machine-readable portion, a user's input (e.g., mouse-over, key-press, setting, etc.) on a user device displaying social media content 100, or a combination thereof.

In another embodiment, transaction subject 108 may be indicated by target portion indicia 104 of an adornment as being an item for purchase by the poster of social media content 100. As one of ordinary skill in the art would appreciate the roles of the buyer and seller are reversed and instead of information indicating how much a particular good or service cost, defines how much the purchaser is willing to pay and/or other terms of commerce associating with purchasing an item. In still other embodiments, transaction subject 108 may be the subject of a prospective lease, rental, give away, loan, barter, donate, gift, view, listen, down-load, try, bid, offer, trade, or other term of commerce and/or a combination thereof.

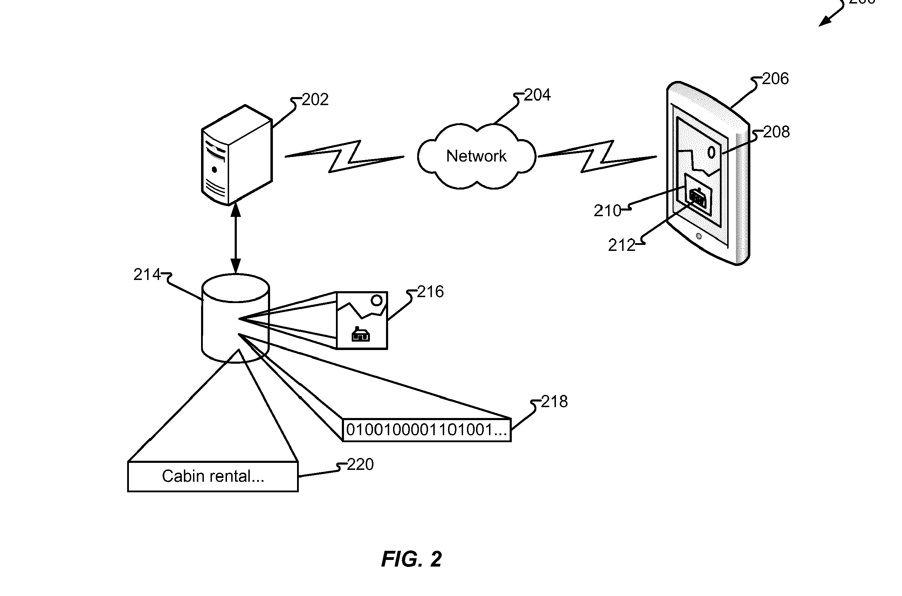

With reference now to Fig. 2, system 200 will be described in accordance with embodiments of the present disclosure. In one embodiment, server 202 and user device 206 are logically attached via a connection to network 204. Network 204 may comprise, in whole or in part, the Internet, WiFi, Bluetooth, WiMax, cellular, infrared, near-field communications, packet-based and/or switch-based telephony, and/or other networking technology.

In one embodiment, server 202 serves the content of social media content 208 to enable user device 206 to display thereon. Server 202 receives a request for social media content 208, such as by a webpage request from a browser and/or application executing on user device 206, and accesses content comprising social media content 208, which may be static and/or generated. Stored portions and/or code for the generation of dynamic portions may be available to server 202 via an accessible storage, such as an internal memory module, external memory, and/or database 214.

In one embodiment database 214 comprises a record having stored social media content 216, such as a picture, photograph, video, graphic, multimedia, and/or other visual element. In order to promote understanding and clarity with regard to the embodiment illustrated, stored social media content 216 is shown as a human-readable graphical element within database 214 for convenience only. Database 214 is an electrical, magnetic, and/or optical storage device storing data in a machine-storable format. For example, stored social media content 216 may be stored as a BMP, JPEG, GIF, PDF, PNG, AVI, MP4, and/or other visual media format when social media content 216 is a static image.

In another embodiment, machine-readable portion 216 comprises a record wherein at least one of server 202 and/or user device 206 receives instructions related to the display of adornment 210 and/or actions taken upon receiving an input associated with adornment 210. It should be noted that machine-readable portion 218 may be capable of being read by a human. For example HTML, XML, etc., as used herein, are machine-readable as the purpose of the HTML, XML is to cause a browser or similar application to perform certain actions. HTML, XML, and other non-compiled code and/or scripts, as used herein are machine-readable even though they may be readily read and understood by a human. As can be appreciated by one of ordinary skill in the art, compiled code, binary files, and similar files, which may be read by a highly skilled human, are machine-readable. Machine-readable portion 218 is operable to provide instructions to a system, such as server 202 and/or user device 206, and therefore as used herein is machine-readable. Machine-readable portion 218 may cause and/or define input/output elements utilized by user device 206, including but not limited to, human-readable portion 220.

Human-readable portion 220 may comprise text, symbols, and/or other graphical elements to convey information in a readily readable format.

In another embodiment, social media content 208 is provided as a single data element. For example, upon receiving a request from user device 206 to display social media content 208, user device 206 causes a signal to pass via network 204 to server 202. Upon receiving signal, server 202 assembles a single data element, such as a webpage (e.g., HTML) or portion thereof, comprising a plurality of stored social media content 216, machine-readable portion 218, and/or human-readable portion 220. In another embodiment social media content 208 comprises code (e.g., hooks) such that social media content 208 requests individual portions of the social media content 208. For example, social media content 208 may comprise adornment 210 however upon receiving an input from a user upon user device 206 associated with adornment 210 does user device 206 request human-readable portion 220 and, once received, may then display human-readable portion 220. In such embodiments, the processing of social media content 100 may be more client-side weighted.

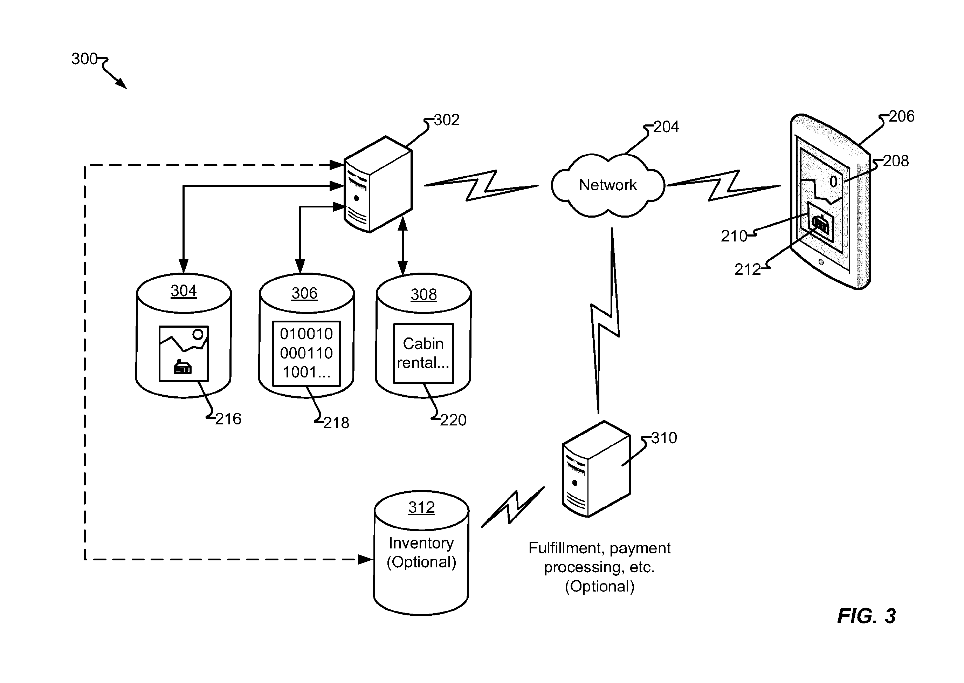

With reference now to Fig. 3, system 300 will be described in accordance with embodiments of the present disclosure. In one embodiment, server 302 accesses discrete accessible memory in the form of social media database 304, machine-readable database 306, and human-readable database 308. In other embodiments two or more of databases 304, 306, and 308 may be combined. In still other embodiments, one or more of social media database 304, machine-readable human-readable database 308 may be comprised of multiple databases, memory banks, servers, clouds, websites, or other storage media accessible by server 302.

In one embodiment, server 302 is a single physical server. In other embodiments server 302 may comprise a plurality of servers, processors, processes, and/or systems. In another embodiment, fulfillment server 310, connected to other components via network 204, processes a purchase transaction using user device 206. Fulfillment server 310 may alone, or with benefit of other systems, facilitate the transaction such as by authenticating a purchaser, processing payment, process shipping information, initiating order fulfillment, sending confirmations, and optionally causing inventory database 312 to update an item count in accord with the purchase.

In another embodiment, some or all of fulfillment database 310, inventory database 312, and server 302 functionality may be further segregated into discrete components or combined into fewer components. In another embodiment server 302 may update one or more of social media database 304, machine-readable database 306, and/or human-readable database 308 in accord with the inventory update. For example an item that has been sold-out may be entirely removed from social media database 304 such that a request for social media content 208 may result in an error message or the presentation of alternative social media content. In other embodiments human-readable portion 202 may be updated to reflect the lack of present inventory, an estimated date the future inventory, or other information. In another embodiment machine-readable database 306 may update machine-readable portion 218, for example, to cause adornment 210 to not be displayed until such time as the inventory has been replenished. Alternatively, machine-readable database 306 may update machine-readable portion 218 to perform a different action upon receiving an input associated with transaction subject 212, such as to display an informational message related to the inventory in lieu of initiating the transaction for the purchase of transaction subject 212. The informational message may be system-wide and/or defined by a portion of human-readable portion 220.

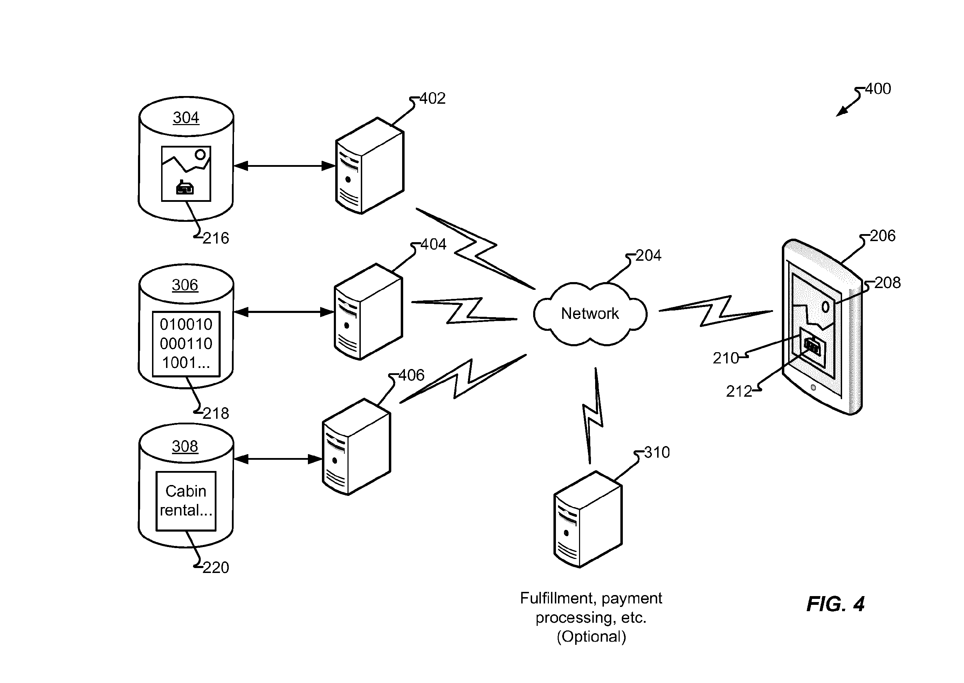

With reference now to Fig. 4, system 400 will be described in accordance with embodiments of the present disclosure. In one embodiment, social media content 208 comprises machine-readable portion 218 directed towards assembling social media content 208 from two or more discrete sources. For example, social media content 208 may request stored social media content 216 from social media server 402. Social media content 208 may request, or cause to be requested, machine-readable portion 218 from machine-readable portion server 404 and/or human-readable portion 220 from human-readable database 308. In another embodiment, machine-readable portion 218 may request human-readable portion 220 from human-readable portion server 406. In another embodiment, fulfillment server 310 may communicate with one or more of social media server 402, machine-readable portion server 404, human-readable portion server 406, and/or user device 206. One of ordinary skill in the art may appreciate that the embodiment described with respect to system 400 may be more readily associated with social media content 208 that includes or incorporates a client-side process to present adornments such as adornment 106 and/or indicia of target portion 104, and/or human-readable portions presented on user device 206. Other embodiments are also provided.

In another embodiment, a server, such as social media server 402, receives the request for social media content 208 and via network 204 retrieves machine-readable portion 218 from machine-readable portion server 404 and/or human-readable portion 220 from human-readable portion server 406 and serves social media content 208, comprising the retrieved component, from social media server 402.

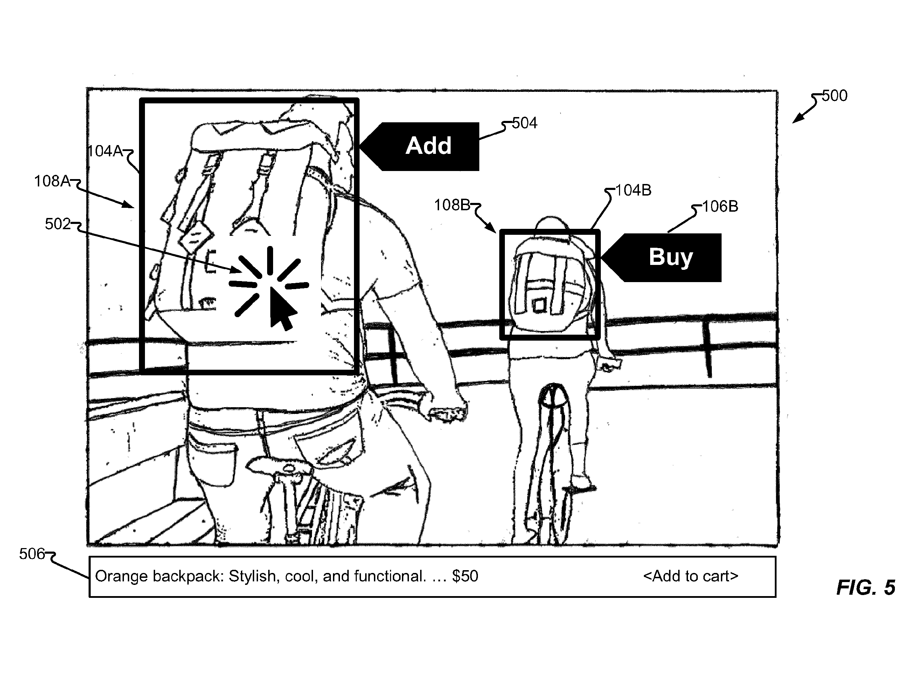

With reference now to Fig. 5, social media content 500 will be described in accordance with embodiments of the present disclosure. In one embodiment, input 502 has been received within target portion indicia 104A. Input 502 may be embodied as a mouse click, finger or stylus tap, keystroke, voice input, and/or other input associated with making a selection within target portion indicia 104A, interaction with another adornment, such as label 106A, or otherwise associated with transaction subject 108A. In one embodiment machine-readable portion 218 may comprise code to cause graphical elements to update upon receiving input 502. For example, second human-readable portion 506 may be displayed to provide additional information and/or instruction to the user. The machine-readable portion 218 may launch a process or module to initiate the purchase for transaction subject 108A. In one embodiment, adornment 106A may be updated to become adornment change 504. For example, adornment change 504 may indicate that the item is available for purchase, lease, rental, giveaway, quantity information, options (e.g., color, size, etc.). Similarly, second humanreadable portion 506 may provide the additional information and/or instructions to initiate the transaction for transaction subject 108.

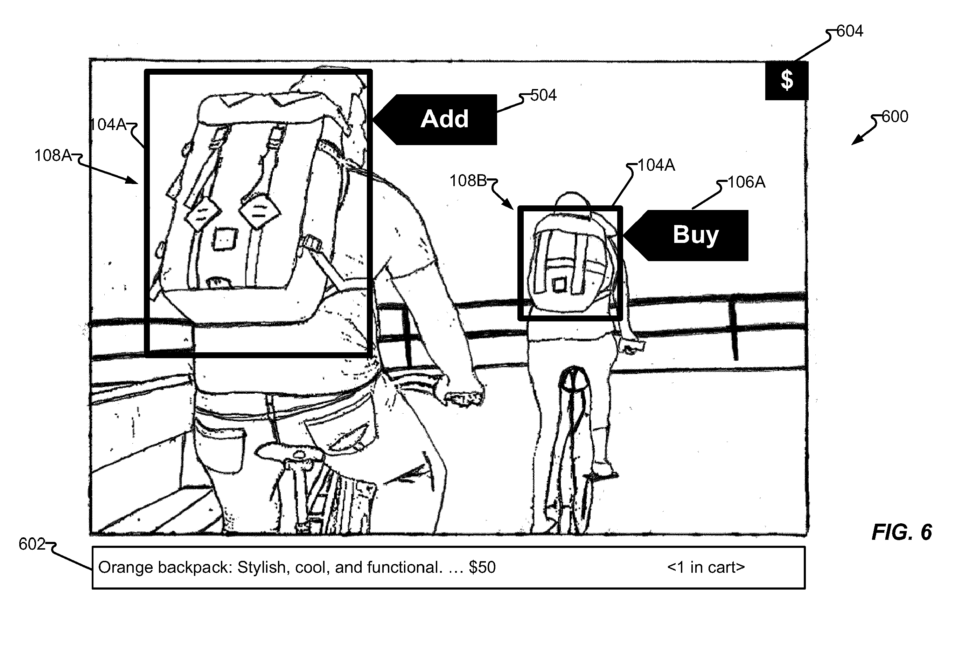

With reference now to Fig. 6, social media content 600 will be described in accordance with embodiments of the present disclosure. In one embodiment, a user has initiated a transaction to make a purchase in accord with transaction subject 108A (e.g., a backpack). In one embodiment updated second human-readable portion 602 provides an informational message such as details of the item purchased, summary of the transaction, and/or other messages. Updated second human-readable portion 602 and/or shopping cart indicator 604 may then provide information guiding the user on how to complete the transaction, such as by launching a transaction module. Alternatively, the user may choose to ignore the information to continue shopping and/or viewing social media content. Upon receiving an appropriate input from shopping cart indicator 604 and/or a link in updated second human-readable portion 602 the user may then be presented with a screen from a transactional process facilitating completion of the purchase.

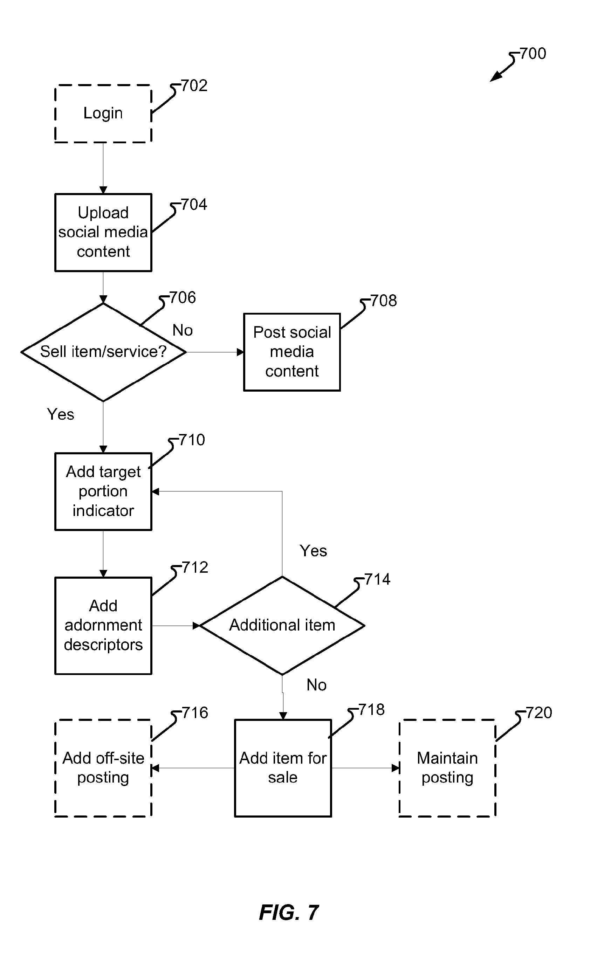

With reference now to Fig. 7, process 700 will be described in accordance with embodiments of the present disclosure. In one embodiment, process 700 begins optionally with step 702 whereby user logs into a social media account with a social media website. Step 702 may be omitted whereby process 700 begins at step 704 wherein social media content is uploaded to the social media website server, such as server 202, 302, and/or 402. Social media content uploaded in step 704 may then be stored as stored social media content 612 within database 214, 304. At step 706, the user is asked whether they are selling an item or service. If step 706 is answered in the negative, processing continues to step 708 whereby social media content is posted in accordance with the policies and procedures of the social media site and process 700 may terminate. If step 706 is answered in the affirmative, processing continues to step 710.

Step 710 receives from the user a target portion indicator of an adornment to the social media content uploaded and step 704 or previously uploaded. Step 710 receives a user's input, which then may be processed to determine adornments, such as adornments 104, 106, 210. Processing may be executed to translate the user's input such as type, size, position, color, etc. of target portion indicia 104 and/or adornment 106 into machine-readable content, such as machine-readable portion 218 for serving to a user device. Step 712 is then executed to add adornment descriptors. Adornment descriptors may comprise user-defined content associated with and/or appropriate for transaction subject 108 as it may be determined, in part, upon the specific social media content 100, transaction subject 108, and/or the associated transaction (e.g., purchase, sale, rental, etc.). For example, a transaction subject may require an adornment comprising a target portion indicia 104 displayed in a manner that stands out on a very dark background, and a user-defined content that explains that the item is available for rent.

Adornment descriptors provided in step 712 may also include transaction terms, such as price, delivery date, delivery means, inventory available, etc. Next, step 714 determines if additional items are going to be made available for sale. If yes, processing continues to step 712 and continues back to step 710 if no, processing continues to step 718.

Step 718 then adds the item for sale to the social media website in order to make the item available for purchase. This may include additional descriptions, accessories or other related items, terms, configurations (e.g., size, color, etc.) or information that may be determined useful or necessary to present or make available to a purchaser. For example, server 202 may be enabled to serve social media content 208 with adornments 210 indicating transaction subject 218 and further be operable to allow a user viewing social media content 208 to purchase transaction subject 218.

Step 718 may then branch to optional step 716, whereby additional off-site posting may be provided. For example, step 716 may generate an email and/or code or objects for place-ment on a different site (e.g., email, webpage, and/or other social media site). The code and/or objects generated or selected for placement on a different site may depend upon the capabilities of the different site. For example, an email operable to display HTML may comprise images, image maps, executable code, and/or other multimedia elements. In another example, an email operable to only display text may include attachments (e.g., links, compressed files, executable code, etc.) with instructions on how to properly view the content within a text portion of the email.

A user may cause step 716 to generate links and/or objects with embedded links, for placement on another location, such as another social media website operable to be viewed by a user of the other social media website. As a benefit, a viewer of social media content 100 may experience substantially the same experience, and be provided with substantially the same functionality, regardless of the host.

In another embodiment, certain customizations may be created by steps 716 and/or 718. For example, a string of static text may be generated as a component of human-readable portion 220 for language-specific generation of an object upon a website with users speaking that language. In another embodiment, a plurality of static texts are generated by step 716 for dynamic selection of the text, such as language-specific text, by a viewer of social media content 100. Machine-readable portion 218 may include code enabling the selection, by the viewer and/or a hosting website, to select which one of the plurality of static texts will be presented to a user. In another embodiment, code to provide dynamic text may be generated by step 716. For example, a link may be operable to display static text but as translated into a view-selected and/or website-selected language. Other code may provide dynamic text including, but not limited to, dynamic prices, prices in one or more alternative currencies, inventory count, symbol substitution (e.g., dollar sign for pound, Euro, Yen, etc.), etc. In yet another embodiment, step 716 may generate code, or selectable code, or other content based upon user device 206. For example, certain human-readable portions 220 may be visible upon a mouse-over event, when viewed on a user device 206 that comprises a mouse or similar pointing device. However, when user device 206 is a tablet, smartphone, or other device wherein the pointing device may be a finger, and therefore obscure the content, other means of displaying such content may be provided (e.g., toggle, tab, etc.).

Optional step 720 may be executed within process 700 or as a standalone process to modify the listing, such as to update human-readable content, change the position of adornments, change the adornment, and/or delete the item as being for sale.

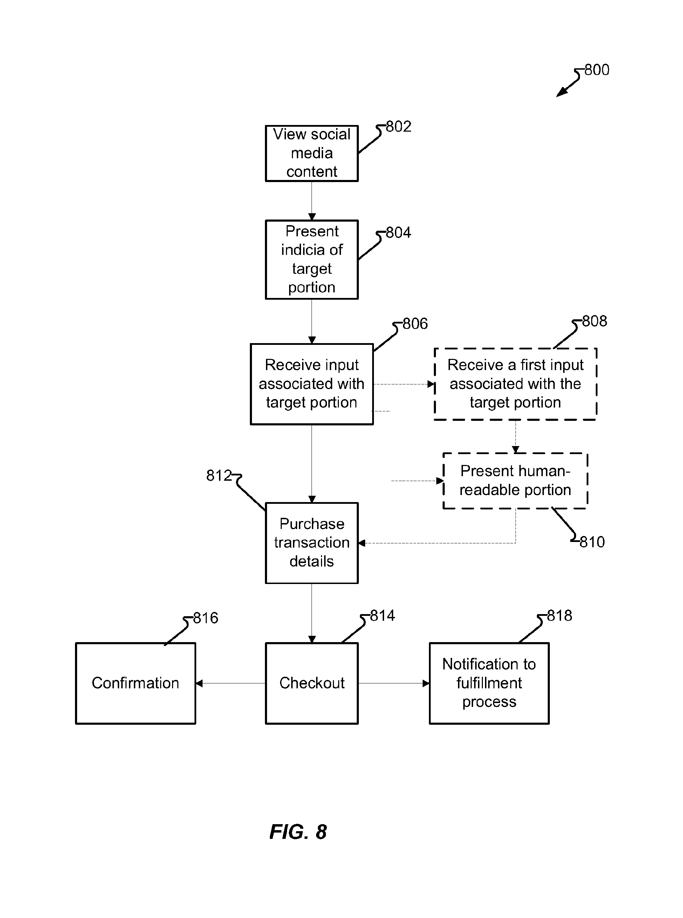

With reference now to Fig. 8, process 800 will be described in accordance with embodiments of the present disclosure. In one embodiment, process 800 begins with a request to view social media content at step 802. Step 802 may be executed on a user device, such as a computer, tablet computer, laptop, smart phone, or other web-enabled device (e.g., television). Step 804 presents indicia of the target portion upon the user device. Next, step 806 receives input associated with the target portion.

Step 802 may be a mouse-over, tap-selection, keystroke, and/or any other input associated with the target portion indicia. When step 802 is associated with a purchase, process 800 may continue to step 812.

Optionally, step 806 may comprise or trigger step 808 and 810 or step 810 alone. Step 810 segregates the input into a first input of a plurality of inputs. For example, step 808 may be a mouse-over event associated with a target area and cause step 810 to present additional information. As can be appreciated by those of ordinary skill in the art, optional steps 808 and 810 or 810 alone may be executed a number of times. For example, to bring up a dialog box comprising additional information and/or options, configure the item for purchase, and/or other information/actions. Step 810 then continues with step 812.

Step 812 receives purchase transaction details in order to complete the purchase. Next, processing continues to step 814 whereby the purchase is completed. Checkout process of step 814 may then fork and include confirmation step 816, whereby the user is notified that the purchase has been completed, and/or step 818, whereby fulfillment process has been notified such as to initiate delivery of the item authorized for downloading, and/or otherwise complete the transaction.

Processes 700 and/or 800 may be executed by at least one processor. Optionally, processes 700 and/or 800 may be stored on a non-transitory computer readable media for enabling a computer to read the processes and execute the instructions encoded upon the media.

In the foregoing description, for the purpose of illustration, methods were described in a particular order. It should be appreciated that in alternate embodiments, the methods may be performed in a different order than that described. It should also be appreciated that the methods described above may be performed by hardware components or may be embodied in sequences of machine-executable instructions, which may be used to cause a machine, such as a general-purpose or special-purpose processor (GPU or CPU) or logic circuits programmed with the instructions to perform the methods (FPGA). These machine-executable instructions may be stored on one or more machine-readable mediums, such as CD-ROMs or other types of optical disks, floppy diskettes, ROMs, RAMs, EPROMs, EEPROMs, magnetic or optical cards, flash memory, or other types of machine-readable mediums suitable for storing electronic instructions. Alternatively, the methods may be performed by a combination of hardware and software.

Specific details were given in the description to provide a thorough understanding of the embodiments. However, it will be understood by one of ordinary skill in the art that the embodiments may be practiced without these specific details. For example, circuits may be shown in block diagrams in order not to obscure the embodiments in unnecessary detail. In other instances, well-known circuits, processes, algorithms, structures, and techniques may be shown without unnecessary detail in order to avoid obscuring the embodiments.

Also, it is noted that the embodiments were described as a process, which is depicted as a flowchart, a flow diagram, a data flow diagram, a structure diagram, or a block diagram. Although a flowchart may describe the operations as a sequential process, many of the operations can be performed in parallel or concurrently. In addition, the order of the operations may be re-arranged. A process is terminated when its operations are completed, but could have additional steps not included in the figure. A process may correspond to a method, a function, a procedure, a subroutine, a subprogram, etc. When a process corresponds to a function, its termination corresponds to a return of the function to the calling function or the main function.

Furthermore, embodiments may be implemented by hardware, software, firmware, middleware, microcode, hardware description languages, or any combination thereof. When implemented in software, firmware, middleware or microcode, the program code or code segments to perform the necessary tasks may be stored in a machine-readable medium, such as a storage medium. A processor(s) may perform the necessary tasks. A code segment may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, data, etc. may be passed, forwarded, or transmitted via any suitable means including memory sharing, message passing, token passing, network transmission, etc.

While illustrative embodiments of the disclosure have been described in detail herein, it is to be understood that the inventive concepts may be otherwise variously embodied and employed, and that the appended claims are intended to be construed to include such variations, except as limited by the prior art.

## Claims

1. A system, comprising:
a server comprising a processor and the accessible storage;
a network interface communicatively coupling the server to a network;
an adornment descriptor stored in the accessible storage; and
wherein the adornment descriptor comprises a machine-readable portion and a human-readable portion;
wherein the machine-readable portion defines a target portion of a social media content;
wherein the human-readable portion comprises at least a first human-readable indicia of a transaction subject associated with the target portion; and
wherein the server presents to a user device, via the network interface, the social media content comprising an adornment defined by the adornment descriptor.

2. The system of claim 1 wherein:
the server comprises at least a social media server and an adornment server; and
wherein, upon receiving a signal indicating the social media server has received a request to present the social media content, the adornment server provides the adornment descriptor for presentation of the adornment with the social media content.

3. The system of claim 1, wherein the server is operable to receive a signal associated with an input received by the user device and further associated with the adornment; and
upon receiving the signal, initiate a transaction associated with the transaction subject.

4. The system of claim 3, wherein the transaction is a purchase transaction of an item pictured and identified by the adornment.

5. The system of any of claims 3 to 4, wherein the server upon completion of the transaction notifies a fulfillment process of the completed transaction.

6. The system of any of claims 3 to 5, wherein the server, upon completion of the transaction, decrements an inventory count associated with the transaction subject.

7. The system of claim 1, wherein the server is operable to receive a signal associated with an input received by the user device and further associated with the adornment; and
upon receiving the signal, is operable to cause a second human-readable indicia of the transaction subject to be presented upon the user device.

8. The system of any of claims 1 to 7, wherein the human-readable portion comprises an inventory count.

9. The system of any of claims 1 to 8, wherein the human-readable portion is defined by a party authorized by the owner of the social media content.

10. The system of any of claims 1 to 9, wherein at least the target portion of the machine-readable portion is defined by a party authorized by the owner of the social media content.

11. A method comprising:
receiving, by a server, a social media content;
receiving, by the server, an adornment descriptor input associated with a target portion of the social media content;
generating, from the adornment descriptor input, a machine-readable portion of an adornment description, and wherein the machine-readable portion comprises data to cause indicia of the target portion to be displayed on a viewing device configured to display the social media content;
receiving, by the server, a human-readable portion of the adornment description;
storing the social media content and the associated adornment descriptor; and
upon receiving a request, presenting the stored social media content and associated adornment descriptor.

12. The method of claim 11, wherein the step of generating further comprises generating a revised social media content comprising the adornment descriptor.

13. The method of any of claims 11 to 12, wherein the server comprises at least a social media server and an adornment server; and
wherein the social media content is served from the social media server and the adornment descriptor is served from the adornment server.

14. The method of any of claims 11 to 13, wherein the server comprises an email file system.

15. The method of any of claims 11 to 14, wherein the human-readable portion comprises a first portion and a second portion, and wherein the machine-readable portion is operable to present the social media content with the first portion and, in response to receiving an input in accord with the target portion, the machine-readable portion is operable to present the second portion.

16. The method of any of claims 11 to 15, further comprising:
receiving a fulfillment response instruction; and
the step of generating the machine-readable portion further comprises, generating an instruction to perform the fulfillment response instruction upon receiving indicia of a completed transaction for the transaction subject indicated by the target portion.

17. A method, comprising:
receiving, at a server, a request for social media content;
accessing, by the server, the social media content;
determining, by the server, that the social media content comprises an adornment descriptor comprising a machine-readable portion and a human-readable portion;
serving the social media content with the adornment descriptor; and
causing the social media content to display indicia of a target portion defined by the machine-readable portion.
